(19)

Europäisches
Patentamt
European
Patent Office
Office européen
des brevets

(11) **EP 3 920 464 A1**

(12) **EUROPEAN PATENT APPLICATION**
published in accordance with Art. 153(4) EPC

(43) Date of publication:
08.12.2021 Bulletin 2021/49

(21) Application number: 20748648.1

(22) Date of filing: 02.02.2020

(51) Int Cl.:
*H04L 9/32* (2006.01)      *G06Q 20/06* (2012.01)
*G06F 21/64* (2013.01)

(86) International application number:
**PCT/JP2020/003840**

(87) International publication number:
**WO 2020/158953 (06.08.2020 Gazette 2020/32)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 03.02.2019 JP 2019017542

(71) Applicant: **bitFlyer Blockchain, Inc.**
**Minato-ku**
**Tokyo 1076237 (JP)**

(72) Inventor: **KOMIYAMA Takafumi**
**Tokyo 107-6237 (JP)**

(74) Representative: **Pinney, Matthew David**
**Marks & Clerk LLP**
**62-68 Hills Road**
**Cambridge CB2 1LA (GB)**

(54) **METHOD FOR STORING TRANSACTION THAT REPRESENTS ASSET TRANSFER TO DISTRIBUTED NETWORK AND PROGRAM FOR THE SAME**

(57) A method for storing a transaction that represents an asset transfer in a distributed network, wherein a transaction processing speed is greatly improved. A first partial network 110 included in a distributed network receives a transaction 200 generated by a user terminal 140 and representing the transfer of assets 203 from a source identifier 201 to a destination identifier 202 and generates a block that includes the transaction 200 to perform a consensus building process for adoption of the block in the first partial network 110 (S303). Each node, storing asset states of the source identifiers processable by each node, records the transfers of assets from the source identifiers described in one or a plurality of transactions included in the block added through the consensus building (S304). By determining source identifiers processable in each partial network, transactions are processed in parallel.

FIG.3

EP 3 920 464 A1

**Description**

TECHNICAL FIELD

The present invention relates to a method and a program for storing a transaction representing an asset transfer to a distributed network with a plurality of nodes. It also relates to a node included in the distributed network.

BACKGROUND ART

A blockchain network, in which a database is built on a distributed network with a plurality of nodes, is highly tamper-resistant due to its decentralized nature. This is because even if the database is tampered with in one of the nodes, it is difficult to rewrite the entire distributed network. The blockchains stored in each node are synchronized with each other and function as a database.

While increasing the number of nodes improves tamper-resistance, it generally reduces the processing speed for block adoption due to the need to store the same blockchain in each node. Intuitively, increasing the number of nodes should improve the processing speed per unit of time, but in blockchains, it does the opposite, so various attempts are being made. Increasing the block size and reducing the data capacity of one or more transactions included in a block are examples.

SUMMARY OF INVENTION

TECHNICAL PROBLEM

However, among the various current attempts, one that can significantly improve scalability cannot be found. In particular, when considering the practical management of transfers of assets such as virtual currency, real currency, and stocks in a database on a distributed network, scalability is an urgent issue in the practical application of blockchain, especially for Bitcoin, which is said to be able to process only a few transactions per second.

The objective of the present invention is to largely improve the transaction processing speed per unit time in a method and a program for storing a transaction representing an asset transfer in a distributed network with a plurality of nodes, as well as on a node included in the distributed network.

SOLUTION TO PROBLEM

To achieve such an objective, a first aspect of the present invention is a method for storing a transaction representing an asset transfer in a distributed network with a plurality of partial networks, comprising: a node, included in a first partial network of the plurality of partial networks, receiving a first transaction representing an asset transfer from a source identifier that can be processed in the first partial network to a destination identifier that cannot be process in the first partial network, the node generating a block including the first transaction, the node updating an asset state of the source identifier, after building consensus in the first partial network on an adoption of the block, and the node transmitting a second transaction, for reflecting the asset transfer to the destination identifier represented by the first transaction, to a second partial network that can process a source identifier that matches the destination identifier of the first transaction, after building consensus in the first partial network on the adoption of the block.

The second aspect of the present invention is the method of the first aspect, wherein a signature by a private key of the source identifier is added to the first transaction.

The third aspect of the invention is the method of the first or second aspect, wherein an amount of the asset to be transferred is a positive value.

The fourth aspect of the invention is the method of any one of the first to third aspects, wherein a signature indicating that a consensus has been built in the first partial network is added to the second transaction.

The fifth aspect of the invention is the method of the fourth aspect, wherein the signature of the second transaction is a single signature.

The sixth aspect of the invention is the method of the fourth or fifth aspect, wherein the signature of the second transaction is a signature with respect to a block header with a Merkle root of a Merkle tree based on a plurality of transactions, including the first transaction, in the block.

A seventh aspect of the invention is a program for causing a node, included in a first partial network of a plurality of partial networks, to perform a method for storing a transaction representing an asset transfer in a distributed network with the plurality of partial networks, the method comprising: the node receiving a first transaction representing an asset transfer from a source identifier that can be processed in the first partial network to a destination identifier that cannot be process in the first partial network, the node generating a block including the first transaction, the node updating an asset state of the source identifier, after building consensus in the first partial network on an adoption of the block, and the node transmitting a second transaction, for reflecting the asset transfer to the destination identifier represented by the first transaction, to a second partial network that can process a source identifier that matches the destination identifier of the first transaction, after building consensus in the first partial network on the adoption of the block.

An eighth aspect of the present invention is a node, included in a first partial network of the plurality of partial networks, for storing a transaction representing an asset transfer in a distributed network with the plurality of partial networks, configured to: receive a first transaction representing an asset transfer from a source identifier that can be processed in the first partial network to a destination identifier that cannot be process in the first partial network to generate a block including the first transaction, update an asset state of the source identifier, after building consensus in the first partial network on an adoption of the block, and transmit a second transaction, for reflecting the asset transfer to the destination identifier represented by the first transaction, to a second partial network that can process a source identifier that matches the destination identifier of the first transaction, after building consensus in the first partial network on the adoption of the block.

A ninth aspect of the present invention is a method for storing a transaction representing an asset transfer in a distributed network with a plurality of partial networks, comprising: a node, included in a first partial network of the plurality of partial networks, receiving a first transaction representing an asset transfer from a source identifier that can be processed in the first partial network to a destination identifier that cannot be process in the first partial network, the node generating a block including the first transaction, the node updating an asset state of the source identifier, after building consensus in the first partial network on an adoption of the block, the node transmitting a second transaction, for reflecting the asset transfer to the destination identifier represented by the first transaction, to a second partial network that can process a source identifier that matches the destination identifier of the first transaction, after building consensus in the first partial network on the adoption of the block, a node, included in the second partial network, receiving the second transaction, the node generating a second block including the second transaction, and the node updating an asset state of a destination identifier of the second transaction, after building consensus in the second partial network on an adoption of the second block.

A tenth aspect of the invention is a distributed network with a plurality of partial networks for storing a transaction representing an asset transfer, comprising a first partial network and a second partial network among the plurality of partial networks, wherein a node included in the first partial network is configured to: receive a first transaction representing an asset transfer from a source identifier that can be processed in the first partial network to a destination identifier that cannot be process in the first partial network to generate a first block including the first transaction, update an asset state of the source identifier, after building consensus in the first partial network on an adoption of the block, and transmit a second transaction, for reflecting the asset transfer to the destination identifier represented by the first transaction, to a second partial network that can process a source identifier that matches the destination identifier of the first transaction, after building consensus in the first partial network on the adoption of the block, and wherein a node included in the second partial network is configured to: receive the second transaction to generate a second block including the second transaction, and update an asset state of a destination identifier of the second transaction, after building consensus in the second partial network on an adoption of the second block.

ADVANTAGEOUS EFFECT OF INVENTION

According to one form of the invention, by configuring the distributed network with multiple partial networks and defining the transfer source identifiers that can be processed in each partial network, parallel processing of transactions can be performed and processing of multiple transactions can be executed simultaneously.

BRIEF DESCRIPTION OF DRAWINGS

FIG. 1 shows a distributed network according to an embodiment of the present invention.
FIG. 2 is a schematic diagram of a normal transaction according to an embodiment of the present invention.
FIG. 3 is for explaining the flow of a method for storing a transaction according to an embodiment of the present invention.
FIG. 4 is a schematic diagram of a peg transaction according to an embodiment of the present invention.
FIG. 5 is for explaining the consensus building process according to an embodiment of the invention.
FIG. 6 is a flowchart of a method of key generation for consensus building according to an embodiment of the present invention.
FIG. 7 is a flowchart of the method for determining the adoption of a block according to an embodiment of the invention.
FIG. 8 is a schematic diagram of a peg transaction according to another embodiment of the invention.

FIG. 9 is for explaining Merkle tree data according to another embodiment of the invention.

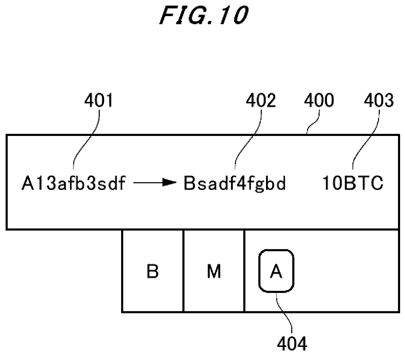

FIG. 10 is a schematic diagram of a peg transaction according to another embodiment of the invention.

DESCRIPTION OF EMBODIMENTS

The embodiments of the invention are explained in detail with reference to the drawings.

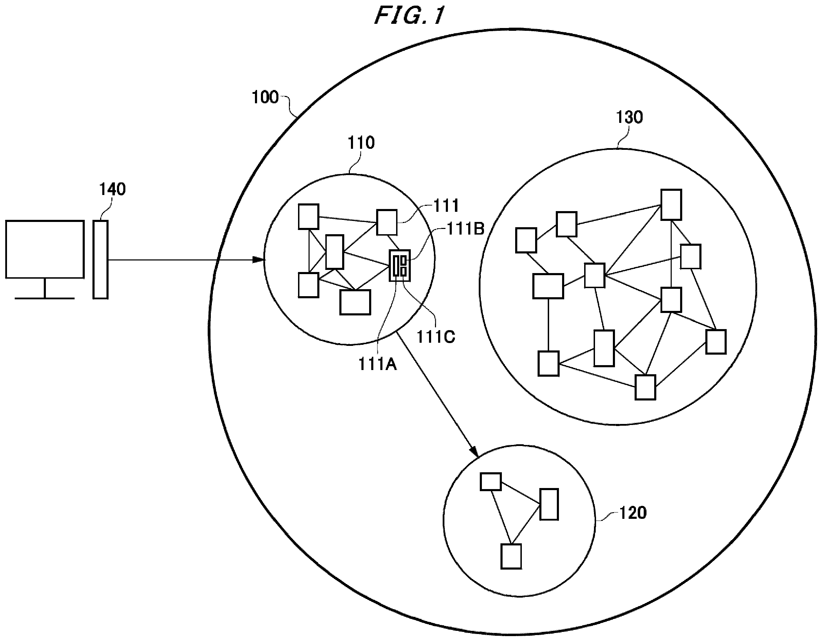

FIG. 1 shows a distributed network according to an embodiment of the present invention. The distributed network 100 has a plurality of partial networks whose behaviors differ depending on the source of a transfer of assets of a transaction to be stored in a database established on the distributed network 100. In FIG.1, a first partial network 110, a second partial network 120, and a third partial network 130 are shown, but the number of partial networks is not limited to three.

Each partial network comprises a plurality of nodes, each of which has a communication unit 111A such as a communication interface, a processing unit 111B such as a processor, CPU, etc., and a storage unit 111C including a storage device or a storage medium such as a memory, a hard disk, etc., and can be configured by executing a program for performing each process. Each node may include one or more apparatuses, computers or servers, and the program may include one or more programs, and may be stored on a computer-readable storage medium to form a non-transitory program product.

At the user terminal 140, a transaction is generated representing the transfer of the assets 203 from the source identifier 201, such as a source address, to the destination identifier 202, such as a destination address. An application for generating such a transaction is installed on the user terminal 140 or is available at the user terminal 140 via a computer network such as the Internet.

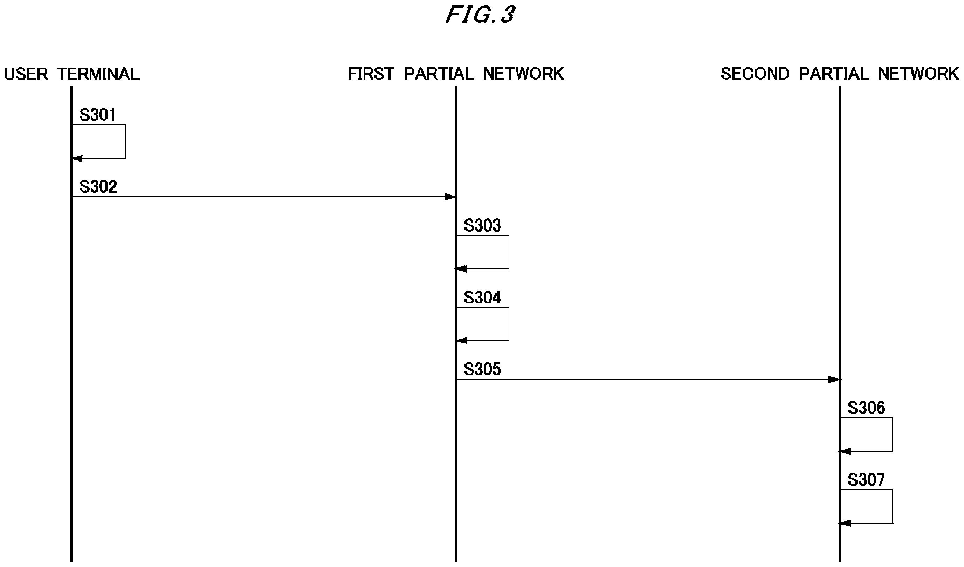

Referring to FIG. 3, a method for storing a transaction representing an asset transfer according to this embodiment will be described. First, a transaction 200 representing a transfer of assets 203, such as virtual currency, from a source identifier 201 to a destination identifier 202 is generated at a user terminal 140 (S301). In the transaction 200, the source identifier 201, the destination identifier 202, and the amount of the assets 203 to be transferred are described, and a signature 204 using a secret key associated with the source identifier 201 is added. For example, the private key of the source identifier 201 is managed to be accessible only by the user terminal 140 or a user of the user terminal 140, and only such user can legitimately perform the asset transfer from the destination identifier 201.

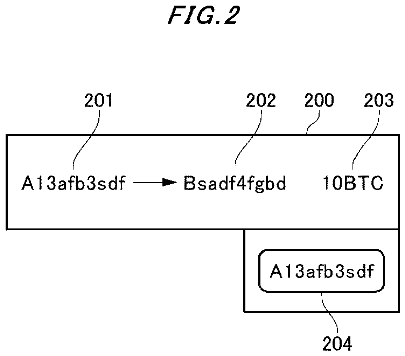

Next, the user terminal 140 transmits a request for recording the transaction 200 to the distributed network 100 (S302). At each partial network, values or a range of source identifiers of a received transaction that can be processed by itself are set. In this embodiment, the application of the user terminal 140 determines the destination of the request for recording the transaction 200 by referring to the correspondence between source identifiers and values or a range of source identifiers that each partial network is capable of processing. In the example of FIG. 1 and FIG. 2, the first partial network 110 receives the transaction 200.

In more detail, in the case of transmitting a transaction 200 to the first partial network 110, the transmission is made to one or more nodes included in the first partial network 110. The node 111 that received the transaction 200 stores the transaction 200 for subsequent processing in its storage unit 111C or in a storage medium or storage device accessible from the node. If necessary, the node 111 that received the transaction 200 transmits the transaction 200 to the other nodes included in the first partial network 110, and the transaction 200 is stored in the nodes participating in the consensus building of block adoption among the plurality of nodes included in the first partial network 110.

Then, a node 111 included in the first partial network 110 generates a block including one or more of the transactions stored up to that point and performs a consensus building process in the first partial network 110 for its adoption (S303). When the consensus building takes place, each node participating in the consensus building adds the block to the blockchain stored by each node. Each node in the first partial network 110 stores public keys corresponding to private keys of source identifiers that can be processed in the first partial network 110, and it is possible to verify the validity of the signature 204 when receiving a transaction or generating a block. The details of the consensus building process performed in the first partial network 110 will be described later. Public keys may not be stored by each node in advance. The transaction 200 may include a public key corresponding to the private key of the signature 204 added to the transaction 200, or the public key may be added to the transaction 200 or may be calculated from the signature 204.

Each node stores, in addition to a blockchain, a correspondence between identifiers, which hold states of assets associated with source identifiers that each node can process, and states of assets is stored. After adding the block to the blockchain, each node records the asset transfers from the source identifiers described in one or more transactions included in the added block (S304). The correspondence may be referred to as an "asset table" for convenience, although it is not limited to table format. The correspondence may also be stored in a storage medium or storage device accessible from each node.

In more detail, as an example, consider the case where the source and destination identifiers that can be processed by the distributed network 100 are a 10-digit symbol sequence starting with "A", a 10-digit symbol sequence starting with "B", and a 10-digit symbol sequence starting with "C". Let's assume that the first partial network 110, the second partial network 120 and the third partial network 130 are set to process source identifiers starting with "A", source identifiers starting with "B", and source identifiers starting with "C," respectively. In response to the completion of the consensus building with respect to a block including a transaction 200 in which the source identifier 201 "A13afb3sdf" is described, each node 111 of the first partial network 110 updates the asset balance of the identifier "A13afb3sdf" in the asset table stored by the node. Specifically, the asset balance of the source identifier "A13afb3sdf" is reduced by 10 BTC.

Next, the node that generated the added block or any other node of the first partial network transmits a transaction 400 corresponding to a transaction, whose destination identifier does not match a source identifier processible in the first partial network 110, among the one or more transactions included in the added block to the partial network where the destination identifier matches the source identifier processible in its own network (S305).

Here, we have assumed that the generation of transaction 400 takes place after the update of the asset table, but these could be reversed. If the consensus building process (S303) includes the verification whether the amount of assets to be transferred from the source identifier of each transaction included in the block is equal to or greater than the balance of the source identifier, the order may be reversed. But if not, the process of updating the asset table (S304) may include the verification whether the amount of assets to be transferred is equal to or greater than the balance, and the transmission of transaction 400 may be executed on the condition that the verification result is positive.

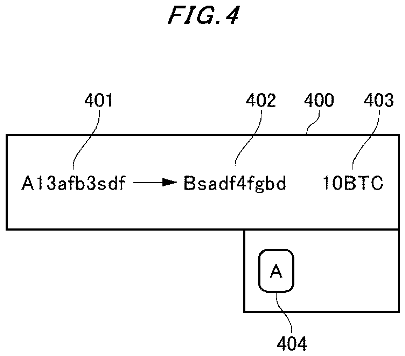

Taking the transaction 400 of FIG. 4, which corresponds to the transaction 200 shown in FIG. 2, as an example, the transaction 400 is for reflecting the transfer of the assets 203 represented by the transaction 200 stored in the first partial network 110 in the second partial network 120 that can process the source identifier that matches the destination identifier 202. It describes the source identifier 401, the destination identifier 402, and the amount of assets 403 to be transferred. Unlike the transaction 200 of FIG. 2, in the transaction 400 of FIG. 4, the signature 404 that is added is a signature indicating that the block containing the transaction 200 has been added to the blockchain, i.e., that a consensus has been built on its adoption in the first partial network 110. In FIG. 4, the signature 404 is illustrated as "A." The details of the signature 404 will be described later.

In the following, the transaction 400 is for the purpose of maintaining the consistency of states of assets among partial networks and may be called a "peg transaction" since it is for pegging. The signature 404 may be called "peg signature."

In the second partial network 120 that received the peg transaction 400, a block containing the peg transaction 400 is generated by one of the nodes and added to the blockchain of each node after a consensus building process (S306) for the adoption of the block is performed. Each node of the second partial network 120 stores public keys corresponding to private keys of source identifiers that can be processed by the second partial network 120, as well as public keys associated with peg signatures by other partial networks. By verifying the peg signature 404 of the transaction 400 as valid by the public key, it can be determined that the transaction 400 is a peg transaction. The public key may not be stored by each node in advance, and the peg transaction 400 may include the public key corresponding to the private key of the signature 404 added to the transaction 400. Alternatively, the public key may be added to the transaction 200. In any case, each partial network shall be able to confirm in which partial network the private key can be used for signing, the private key corresponding to the public key corresponding to the private key of the signature 404 added to the peg transaction 400. In other words, each partial network shall be able to confirm which partial network is the so-called owner of the public key.

In order to distinguish whether a transaction received by a partial network is a normal transaction 200 or a peg transaction 400, it is possible to determine it based on the public key used to verify the signature as described above, but it is also possible to determine it based on the identifier. Namely, if the source identifier is not a source identifier that can be processed in the own network, but the destination identifier matches one of the source identifiers that can be processed in the own network, the transaction can be determined to be a peg transaction 400.

After the block is added, for the peg transaction 400 included in the block, each node records the transfer of the assets 203 by updating the asset balance of the destination identifier 402 of the peg transaction 400 (S307). In the normal transaction 200, the asset balance of the source identifier 201 of the assets 203 is updated as described above, but in the peg transaction 400, the asset balance of the destination identifier 402 is updated. The destination identifier 402 of the peg transaction 400 matches one of the source identifiers that can be processed by the second partial network 120, and each node of the second partial network 120 refers to and updates the correspondence, stored in the storage unit of each node or in a storage medium or storage device accessible from each node, between source identifiers that can be processed by its network and states of assets associated with the identifiers.

As described above, by configuring a distributed network with multiple partial networks and setting source identifiers that can be processed in each partial network, transactions can be processed in parallel and multiple transactions can be processed simultaneously. Thus, the transaction processing speed per unit time can be largely improved.

The above description assumes that the application used by the user terminal 140 determines the destination of the request for recording of the transaction 200 by referring to the correspondence between source identifiers and values or a range of source identifiers that can be processed. Alternatively, the transaction 200 may be transmitted to one or more partial networks, and it can be forwarded to a partial network that can process the transaction 200 if the transaction 200 is not a transaction that can be processed by the received partial network. In addition, a forwarding node (not shown) may be provided in the distributed network 100, which first receives the transaction 200 transmitted from the user terminal 140 and then determine a partial network capable of processing the transaction 200 depending on the value of the source identifier 201.

The above description assumes that the destination of the peg transaction 400 is determined in the first partial network 110, but it is conceivable that the transmission is performed in the same manner as the destination of the normal transaction 200.

In the above description, any particular constraint is not imposed on the amount of assets 203, but it is preferable for the amount to be a positive value and process the transaction 200 as invalid if the balance is insufficient when it is verified. If it is set to a negative value, that is, if the source identifier 201 receives assets 203, the asset balance of the destination identifier 202 is not managed in the asset table of the first network 110, so that it is not possible to verify whether the balance is insufficient or not. Therefore, a situation may arise in which even though a block containing the transaction is added in the first partial network 110, it is treated as invalid due to insufficient balance of the transferee identifier 202 in the second partial network 120.

In the above embodiments, it is to be noted that if the term "only" is not written, such as in "based only on x", "in response to x only", or "in case of x only", in the present specification, it is assumed that additional information may also be taken into account. Also, as an example, it is to be noted that a description "b is performed in case of a" does not necessarily mean "b is always performed in case of a."

In addition, as a caveat, even if there are characteristics of a method, a program, a terminal, an apparatus, a server or a system (hereinafter referred to as "method, etc.") that perform operations different from those described herein, each aspect of the invention is intended to perform the same operation as one of the operations described herein, and the existence of an operation different from those described herein does not mean that the method, etc. is outside the scope of each aspect of the invention.

Details of consensus building

Consensus building in a partial network can be done under various consensus algorithms, one example of which requires signatures by k nodes (k is an integer satisfying $2 \leq k \leq N$) out of N nodes (N is an integer greater than or equal to 2) participating in the consensus building. This means that a signature by a majority of the nodes participating in the consensus building is required. Then, in order to show that a consensus has been built and the adoption of the block, which is the subject of the consensus building, has been finalized, it is necessary to attach k or more signatures as a basis.

Depending on the values of N and k, there are many possible combinations of k nodes whose signatures can satisfy the predetermined condition of the consensus algorithm, and this complicates the handling of signatures with respect to the block which is the subject of consensus building. For example, in order to verify the signatures of a block after the fact, it is necessary to check whether the multiple signatures added to the block respectively meet the predetermined condition. Therefore, it is preferable to indicate that a consensus on the adoption of the block has been made in the partial network by a single signature as described below. This is true not only for the consensus building on the adoption of a block, but also for the consensus building for adding the peg signature 404 to the peg transaction 400.

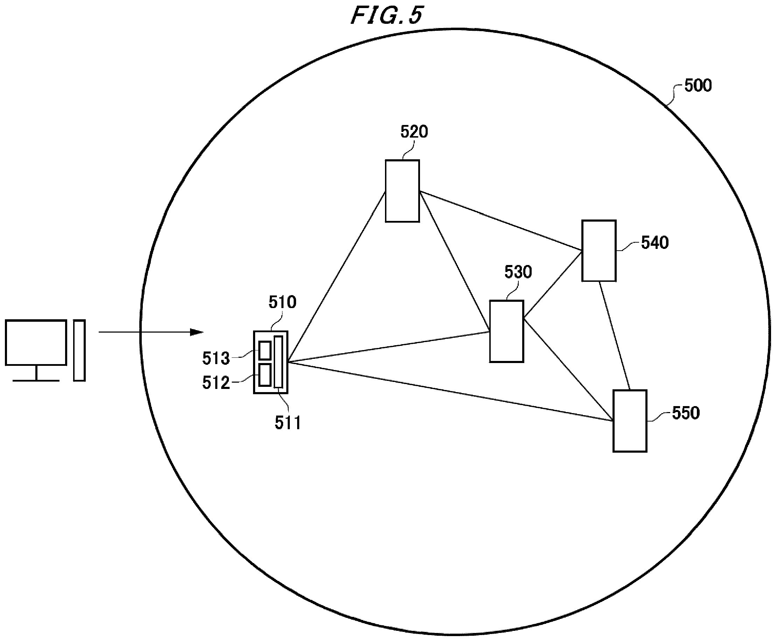

In the network 500 shown in FIG. 5, N is 5 as an example and it has a first node 510, a second node 520, a third node 530, a fourth node 540 and a fifth node 550. Each node is a computer with a communication unit 511 such as a communication interface, a processing unit 512 such as a processor, CPU, etc., and a storage unit 513 including a storage device or a storage medium such as a memory, a hard disk, etc., and each process explained below can be realized by performing a predetermined program. The node 510 may include one or more apparatuses or servers. The program may include one or more programs, and may be stored on a computer-readable storage medium to form a non-transitory program product. The hardware configuration of the other nodes is similar. In the following, we will focus on the first node 510, but the same process can be performed on other nodes. Also, a node that do not participate in consensus building may be included in the network 500.

The predetermined program defines the rules for the consensus algorithm and the rules for the setup, and can be stored in the storage unit 513 or in a storage device or storage medium that can be accessed via a network from the first node 510.

The process that should be performed in order for the N nodes participating in the consensus building to transition from a state in which they can communicate with each other to a state in which they can perform the consensus building for the adoption of a block is called "setup." Setup is initiated by receiving a request for setup outside or inside the network 500, and FIG. 5 shows an example of such a request being transmitted from outside. The request may include the number of signatures required for consensus building, k, or the number may be defined in advance in the rules for the setup. The request may also include a specification of the N nodes that will participate in the consensus building, and this specification may be specified in the rules for the setup in advance.

Once the values of N and k have been determined in one way or another, and the setup process is underway, each node will hold one public key allocated to the entire nodes participating in the consensus building, N public key shares allocated to each node participating in the consensus building, and one private key share allocated to that node. Each node will also hold the values of N and k or the value of k/N. The value of N can also be obtained from the number of public key shares.

The relationship between a private key and a public key is that the plaintext signed by the private key can be verified by the public key, and the same is true for a private key share and its corresponding public key share. Here, "private key share" refers to any one of a set of private key shares generated such that a signature by a given number k of private key shares out of a set of n private key shares can be used to generate a signature by a private key. Therefore, a signature corresponding to the public key can be generated based on the k secret key shares without knowing the said private key, and the said signature can be added to the block that is the target of consensus building. The added signature can be verified by the public key.

Further explaining the example in FIG. 5, one public key allocated to the entire network 500 is denoted as PK (abbreviation of Public Key), the private key corresponding to the public key is denoted as SK (Secret Key), and the public key share and the secret key share allocated to the first node 510, the second node 520, the third node 530, the fourth node 540, and the fifth node 550 are denoted as PK1 and SK1, PK2 and SK2, PK3 and SK3, PK4 and SK4, PK5 and SK5, respectively. The public key share and private key share allocated to the first node 510, the second node 520, the third node 530, the fourth node 540, and the fifth node 550 are denoted as PK1 and SK1, PK2 and SK2, PK3 and SK3, PK4 and SK4, and PK5 and SK5, respectively. After setup, for example, the first node will have PK, PK1 to PK5 and SK1 stored in its storage unit 513 or in a storage device or storage medium that can communicate with that node. The stored data will be accessible by that node in a later process of consensus building or its finalization.

Here, the public key PK is required for the verification of the signature that will be added in the end, but may not be generated at the setup stage. This is because it is only necessary for the node or device that verifies the signature to have the public key PK at the time of verification, and it is not necessarily needed for each node in the network 500 to have it at the time of initial setup.

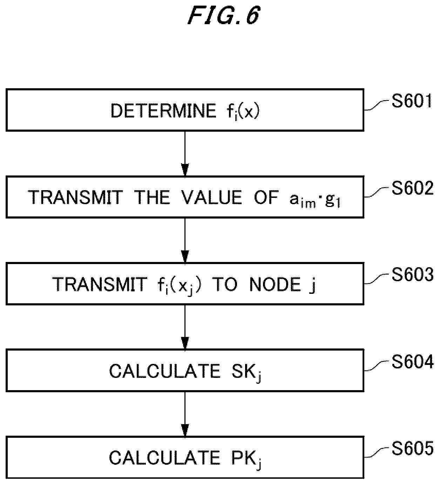

FIG. 6 shows the flow of the generation method of these keys. As an example, we consider a (k-1)-degree polynomial f(x), and assume that the value of f(xi) (i is an integer from 1 to N representing the i-th node, and xi is an arbitrary integer) is the secret key share SKi for each node.

First, the i-th node determines the (k-1)-degree polynomial fi (x) with aim (m is an integer from 0 to k-1) as a coefficient (S601). Each node can calculate fi (x) by selecting or generating aim according to the setup rule and storing it.

$$[\text{equation 1}]$$

$$f_i(x) = \sum_{m=0}^{k-1} a_{im} x^m$$

Next, the i-th node transmits the value of aim·g1 for each m between 0 to k-1 or a message including the value to the other nodes using a generator g1 of a cyclic group G1 (S602). The i-th node also transmits the value of fi(xj) or a message including the value to the j-th node (j is an integer from 1 to N). Here, the fi(xj) may be transmitted before or at the same time as m and aim·g1.

It is assumed that the generator g1 is accessible and usable by each of the N nodes, either because it is stored and known by each node, or because it is given by one of the nodes to the N nodes participating in the consensus building. Similarly, the value of the integer xi that gives the secret key share f(xi) to the i-th node is also assumed to be accessible and usable by each of the N nodes. For example, these values can be stored in the storage unit of each node or in a storage device or storage medium accessible by each node.

Then, at the j-th node, fi(xj) is added for i from 1 to N, to calculate f(xj), or the secret key share SKj (S604). If we define the polynomial f (x) as follows,

$$[\text{equation 2}]$$

$$f(x) = \sum_{m=0}^{k-1} a_m x^m$$

although this is not known to any of the nodes, the value of f(xj) can be calculated at each node without each node knowing f(x) itself, by considering f(xj) as in the following equation:

[equation 3]

$$f(x_j) = \sum_{i=1}^{N} f_i(x_j) = \sum_{i=1}^{N} \left( \sum_{m=0}^{k-1} a_{im}\, x_j{}^m \right) = \sum_{m=0}^{k-1} \left( \sum_{i=1}^{N} a_{im} \right) x_j{}^m = \sum_{m=0}^{k-1} a_m x_j{}^m$$

Since each node can calculate m and aim·g1 at its own node and has already received those of other nodes, it can calculate SKj·g1 as the public key share PKj according to the following equation (S206):

[equation 4]

$$SKj \cdot g_1 = f(x_j) \cdot g_1 = \left( \sum_{m=0}^{k-1} a_m x_j{}^m \right) \cdot g_1 = \left( \sum_{m=0}^{k-1} \left( \sum_{i=1}^{N} a_{im} \right) x_j{}^m \right) \cdot g_1 = \sum_{m=0}^{k-1} x_j{}^m \left( \sum_{i=1}^{N} a_{im} \cdot g_1 \right)$$

The calculation of the public key share PKi by this formula is possible for all nodes without knowing f(x), since m and aim·g1 and xi are known for all i.

The resulting pair of public and private key shares can be shown to be a cryptosystem by defining a bilinear map e, defined by the following equation, from G1×G2 to the cyclic group GT of which gT is the generator. Here, a hash function that gives hash value h of a block, which is the subject of consensus building, is a map from arbitrary data to a cyclic group G2 of which g2 is the generator, SKj •h obtained by multiplying SKj to h is a signature sj, and a and b are arbitrary integers.

[equation 5]

$$e(a \cdot g_1, b \cdot g_2) = g_T^{ab}$$

That is, when the i-th node receives the hash value h and the signature sj of the block which is the subject of consensus building from the j-th node, it can use the public key share PKj known by the algorithm described above to obtain the below equation:

[equation 6]

$$e(PKj, h) = e(SKj \cdot g_1, h) = e(g_1, SKj \cdot h) = e(g_1, s_j)$$

Therefore, it is possible to verify the signature sj received from the j-th node using the known generator g1. The hash value may be calculated from the block, which is the subject of consensus building, at each node by defining a hash function in the setup rule.

It is preferable that the rank numbers of the generators g1 and g2 be prime numbers, and that the numbers of elements of the cyclic groups G1 and G2 generated by respective generators be 32 bytes, or about 256 bits or more, as an example. Here, the operations in the cyclic groups G1 and G2 are described in an additive manner. For example, the operation of repeatedly adding the generator g1 a times is described as a·g1 and is called "multiplying a by the generator g1. Although multiplication between the elements of a set of integers, such as ax, is also used as a notation in the present Specification, it should be noted that this is different from the multiplication in a cyclic additive group.

The above explanation assumes a signature scheme in which the value of a (k-1)-order polynomial function f(x) is the secret key share, and the value obtained by multiplying the secret key share by the generator of a cyclic group is used as the public key share. A different signature scheme may be adopted if it is possible to generate a signature by a private key using signatures by a given number of private key shares out of a set of N private key shares. In this case, it is desirable that each secret key share can be generated in a distributed manner at each node, rather than giving respective nodes a set of secret key shares generated by a node of the network 500 or a node outside of it.

In the above description, we used the public key share PKj and private key share SKj at the j-th node as an example, but we would like to add that when describing the process that takes place at the i-th node, the subscripts will naturally be changed accordingly.

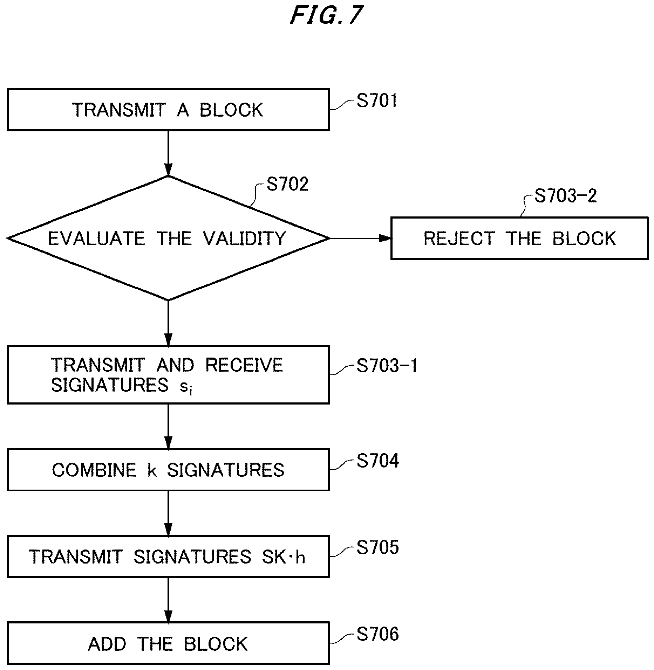

FIG. 7 shows the flow of the method of finalizing the adoption of a block according to one embodiment of the present invention. From the state where the setup is completed, the first node 510 generates a block and transmits a first message including the block to the N nodes participating in the consensus building (S701). The transmitting node can also receive the block by itself. Here, messages can be transmitted and received directly or indirectly between nodes, and data related to the consensus building can be conveyed to other nodes included in the network 100 and data can be received from other nodes.

Each node that has received the first message evaluates the validity of the block in question based on the rule for consensus building defined in the program that each node has (S702). The details of the evaluation of validity may include various rules, such as whether the transmitter is a legitimate transmitting node, whether the data format of the block satisfies a predetermined format for the intended use or other predetermined conditions, whether a fork has not occurred, etc. Different rules may exist for different nodes. In addition, transmitting and receiving messages to and from other nodes may be required in evaluating the validity.

If evaluated as valid, the node in question transmits a second message to each node with a signature si with respect to the hash value h of the block, which is the subject of consensus building, using the secret key share f(xi) accessible to the node (S703-1). The signature can be done by multiplying the hash value by the secret key share given to the node. The destination may include the own node. If the block is evaluated as invalid, it is rejected (S703-2).

After k signatures have been gathered at the j-th node, the node combines these signatures to generate a signature corresponding to the public key PK (S704). Specifically, each node periodically or intermittently determines whether the condition of k/N is satisfied, and if so, from the received signatures by k or more than k secret key shares, $f(0) \cdot h$ can be calculated as the signature $SK \cdot h$ by the secret key SK corresponding to the public key PK. Here, we use the fact that the (k-1)-degree polynomial f(x) can be uniquely determined if k or more points (xi, f(xi)) are known, and the value of f(0) can be considered as the value of the unknown secret key SK. If k points (xi, f(xi)·h) are known from k signatures, the function $f(x) \cdot h$ can be determined. The calculation of $f(0) \cdot h$ can be performed, for example, using Lagrange interpolation.

The public key PK can be calculated from k or more points (xj, PKj) = (xj, f(xj)·g1), for example, by Lagrange interpolation, which may be done during the setup phase, and it can be distributed as needed during the setup phase. Alternatively, it may be generated by a node or device inside or outside the network 500 that verifies the signature based on the k public key shares PKj during or before verification.

Then, if necessary, the generated single signature $SK \cdot h$ is broadcast or transmitted to other nodes (S705). Since the validity of the signature has already been evaluated by k or more nodes, the block can be added to the blockchain of the node upon successful combining, but as an example, the node that successfully combined the signature may transmit the synthesized signature to other nodes, and each node may add the block upon receiving a predetermined number or more of combined signatures.

Finally, the block which is the subject of consensus building is added to the blockchain of each node with the signature $SK \cdot h$ (S706). This finalizes the adoption of the block in the network 700.

In the above description, we have considered the case where each node is given one private key share, but it is also conceivable that the number of shares given to a single node could be two or more. In addition, the above description does not mention the details of the block to be evaluated for validity, but it may include one or more transactions, or it may include any one or more pieces of data. It is also possible to apply the spirit of the invention to the evaluation of the validity by a computer network with a plurality of nodes with respect to one or more pieces of data that do not necessarily form a chain.

Details of peg signature

The peg signature 404 can be generated by a consensus algorithm that is the same as or corresponds to the consensus algorithm used in the consensus building for the adoption of the block in the first partial network 110. Alternatively, it can be generated by a consensus algorithm that is different from the consensus algorithm used in the adoption of the block in the first partial network 110.

In any case, the peg signature 404 can be, as an example, one or more signatures by one or more private keys with respect to a hash value of the peg transaction 400 or a portion thereof. The second partial network 120 that receives the peg transaction 400 verifies the validity of the peg signature 404 upon receipt of the peg transaction 400 or upon generation of the block containing the peg transaction 400.

With this method, even though a consensus has been built once for the adoption of a block, for all transactions in that block whose destination identifier does not match the source identifiers that can be processed by the first partial network 110, the corresponding peg transactions 400 need to be generated and consensus building for signing each of them as the first partial network 110 is needed. As the number of partial networks increases, so does the number of transactions whose destination identifiers do not match the source identifiers that can be processed by the first partial network 110, which increases the consensus building process.

For this reason, another method uses a Merkle tree. To generate the peg signature 404, first, a Merkle root of a Merkle tree is calculated. The Merkle tree is based on a plurality of transactions included in the block added in the first partial network 110, or transactions, among the transactions, whose destination identifiers that do not match the source identifiers that can be processed in the first partial network 110. Then, the Merkle root is signed using a private key as the peg signature 404.

The peg transaction 400 corresponds to the normal transaction 200 where the destination identifier does not match the source identifiers that can be processed by the first partial network 110, and in addition to the peg signature 404, the Merkle tree data M related to one or more nodes required to verify the validity of the peg signature 404 is added. Herein, "Merkle tree data" is data of one or more nodes included in the Merkle tree, and more specifically, one or more hash values. The peg transaction 400 is data that matches or includes the normal transaction 200. By generating a hash value of the peg transaction 400 or a part thereof to calculate a Merkle root using the hash value and the Merkle tree data M received together with the peg transaction 400, whether the peg signature 404 is a signature with respect to the Merkle root can be verified using the public key of the first partial network 110. As an example, the cryptosystem can be ECDSA; in the case of ECDSA, the public key can be calculated from the signature.

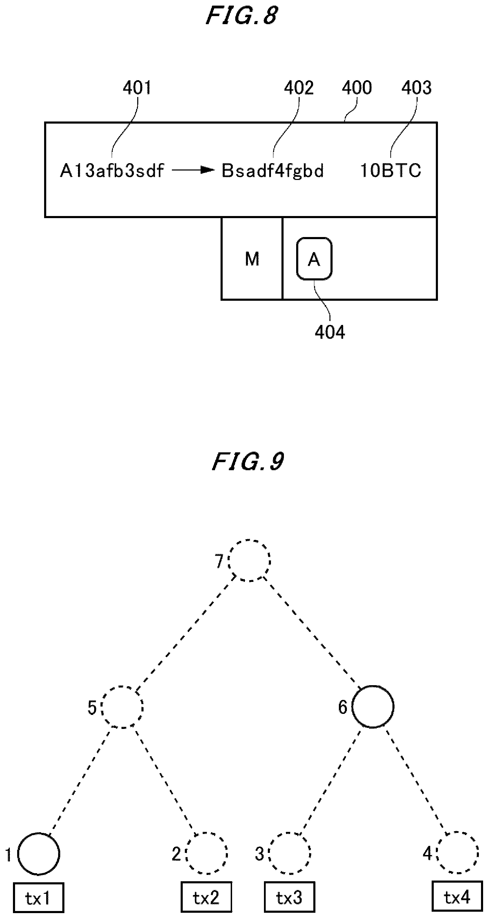

An example of a Merkle tree is shown in FIG. 9. Assume that in the first partial network 110, a block containing four transactions has been added. It is then assumed that a peg transaction 400 corresponding to the second transaction tx2 is transmitted to the second partial network 120. In this case, since the hash value of the second transaction tx2 is obtained as the hash value of the peg transaction 400 or a part of it, the Merkle root of node 7 can be calculated by adding the hash value of node 1 and the hash value of node 6 to the peg transaction 400 as the Merkle tree data M.

If the signature for the block added in the first partial network 110 is a signature with respect to the block header of the block and the signature contains the Merkle root of the Merkle tree of the block, the signature with respect to the block can be used directly as the peg signature 404. In this case, in addition to the Merkle tree data M, the block header or the data B excluding the Merkle tree root from the block header is added to the peg transaction 400, and in the second partial network 120, the block header is generated and whether the peg signature 404 is a signature with respect to the block header can be verified using the public key of the first partial network 110.

A further alternative method is to transmit the entire block added in the first partial network 110 to the second partial network 120 as a peg transaction 400. In this case, since the block contains a transaction whose destination identifier does not match the source identifiers that can be processed by the second partial network 120, unnecessary data is transmitted. However, an additional signature to the peg transaction 400 in the first partial network 110 is omitted, and the signature added in the consensus building for the adoption of the block can be directly considered as the peg signature 404.

In this method, the second partial network 120 that receives the block, which corresponds to the "first block," generates a block, which corresponds to the "second block," that contains one or more transactions whose destination identifiers match the source identifiers that can be processed by the second partial network 120, or transactions corresponding to these transactions, as the subject for the consensus building.

REFERENCE SIGNS LIST

100 distributed network

110 first partial network

111 node of first partial network

111A communication unit

111B processing unit

111C storage unit

120 second partial network

130 third partial network

140 user terminal

200 normal transaction

201 source identifier

202 destination identifier

203 assets

204 signature

400 peg transaction

401 source identifier

402 destination identifier

403 assets

404 peg signature

500 network

510 first node

511 communication unit

512 processing unit

513 storage unit

520 second node

530 third node

540 fourth node

550 fifth node

B block header or data excluding Merkle tree root fromblock header

M Merkle tree data

1 to 7 Merkle tree node

## Claims

1. A method for storing a transaction representing an asset transfer in a distributed network with a plurality of partial networks, comprising:

    a node, included in a first partial network of the plurality of partial networks, receiving a first transaction representing an asset transfer from a source identifier that can be processed in the first partial network to a destination identifier that cannot be process in the first partial network,
    the node generating a block including the first transaction,

the node updating an asset state of the source identifier, after building consensus in the first partial network on an adoption of the block, and

the node transmitting a second transaction, for reflecting the asset transfer to the destination identifier represented by the first transaction, to a second partial network that can process a source identifier that matches the destination identifier of the first transaction, after building consensus in the first partial network on the adoption of the block.

2. The method according to claim 1, wherein a signature by a private key of the source identifier is added to the first transaction.

3. The method according to claim 1 or 2, wherein an amount of the asset to be transferred is a positive value.

4. The method according to any one of claims 1 to 3, wherein a signature indicating that a consensus has been built in the first partial network is added to the second transaction.

5. The method according to claim 4, wherein the signature of the second transaction is a single signature.

6. The method according to claim 4 or 5, wherein the signature of the second transaction is a signature with respect to a block header with a Merkle root of a Merkle tree based on a plurality of transactions, including the first transaction, in the block.

7. A program for causing a node, included in a first partial network of a plurality of partial networks, to perform a method for storing a transaction representing an asset transfer in a distributed network with the plurality of partial networks, the method comprising:

the node receiving a first transaction representing an asset transfer from a source identifier that can be processed in the first partial network to a destination identifier that cannot be process in the first partial network, the node generating a block including the first transaction,

the node updating an asset state of the source identifier, after building consensus in the first partial network on an adoption of the block, and

the node transmitting a second transaction, for reflecting the asset transfer to the destination identifier represented by the first transaction, to a second partial network that can process a source identifier that matches the destination identifier of the first transaction, after building consensus in the first partial network on the adoption of the block.

8. A node, included in a first partial network of the plurality of partial networks, for storing a transaction representing an asset transfer in a distributed network with the plurality of partial networks, configured to:

receive a first transaction representing an asset transfer from a source identifier that can be processed in the first partial network to a destination identifier that cannot be process in the first partial network to generate a block including the first transaction,

update an asset state of the source identifier, after building consensus in the first partial network on an adoption of the block, and

transmit a second transaction, for reflecting the asset transfer to the destination identifier represented by the first transaction, to a second partial network that can process a source identifier that matches the destination identifier of the first transaction, after building consensus in the first partial network on the adoption of the block.

9. A method for storing a transaction representing an asset transfer in a distributed network with a plurality of partial networks, comprising:

a node, included in a first partial network of the plurality of partial networks, receiving a first transaction representing an asset transfer from a source identifier that can be processed in the first partial network to a destination identifier that cannot be process in the first partial network,

the node generating a block including the first transaction,

the node updating an asset state of the source identifier, after building consensus in the first partial network on an adoption of the block,

the node transmitting a second transaction, for reflecting the asset transfer to the destination identifier represented by the first transaction, to a second partial network that can process a source identifier that matches the destination identifier of the first transaction, after building consensus in the first partial network on the adoption of the block,

a node, included in the second partial network, receiving the second transaction,

the node generating a second block including the second transaction, and

the node updating an asset state of a destination identifier of the second transaction, after building consensus in the second partial network on an adoption of the second block.

10. A distributed network with a plurality of partial networks for storing a transaction representing an asset transfer, comprising a first partial network and a second partial network among the plurality of partial networks,

wherein a node included in the first partial network is configured to:

receive a first transaction representing an asset transfer from a source identifier that can be processed in the first partial network to a destination identifier that cannot be process in the first partial network to generate a first block including the first transaction,

update an asset state of the source identifier, after building consensus in the first partial network on an adoption of the block, and

transmit a second transaction, for reflecting the asset transfer to the destination identifier represented by the first transaction, to a second partial network that can process a source identifier that matches the destination identifier of the first transaction, after building consensus in the first partial network on the adoption of the block, and

wherein a node included in the second partial network is configured to:

receive the second transaction to generate a second block including the second transaction, and

update an asset state of a destination identifier of the second transaction, after building consensus in the second partial network on an adoption of the second block.

FIG.1

## FIG.2

201 → A13afb3sdf

202 → Bsadf4fgbd

200, 203 → 10BTC

204 → A13afb3sdf

FIG.3

| USER TERMINAL | FIRST PARTIAL NETWORK | SECOND PARTIAL NETWORK |
|---|---|---|

S301

S302

S303

S304

S305

S306

S307

EP 3 920 464 A1

*FIG.4*

401    402  400  403

A13afb3sdf ——▶ Bsadf4fgbd    10BTC

A

404

FIG.5

## FIG.6

```
┌─────────────────────────────────────┐
│         DETERMINE  f_i(x)           │──── S601
└─────────────────────────────────────┘
                   │
                   ▼
┌─────────────────────────────────────┐
│  TRANSMIT  THE  VALUE  OF  a_im·g_1 │──── S602
└─────────────────────────────────────┘
                   │
                   ▼
┌─────────────────────────────────────┐
│    TRANSMIT  f_i(x_j)  TO  NODE  j  │──── S603
└─────────────────────────────────────┘
                   │
                   ▼
┌─────────────────────────────────────┐
│         CALCULATE  SK_j             │──── S604
└─────────────────────────────────────┘
                   │
                   ▼
┌─────────────────────────────────────┐
│         CALCULATE  PK_j             │──── S605
└─────────────────────────────────────┘
```

*FIG.7*

```
┌─────────────────────────┐
│    TRANSMIT  A  BLOCK    │──S701
└─────────────────────────┘
             │
             ▼
         ╱───────╲                                    ┌─────────────────────┐
        ╱  S702   ╲                                   │  REJECT THE BLOCK   │──S703-2
       ╱           ╲                                  └─────────────────────┘
      ⟨ EVALUATE THE ⟩──────────────────────────────────────▲
       ╲ VALIDITY  ╱
        ╲         ╱
         ╲───────╱
             │
             ▼
┌─────────────────────────┐
│  TRANSMIT  AND  RECEIVE  │──S703-1
│  SIGNATURES  s_i         │
└─────────────────────────┘
             │
             ▼
┌─────────────────────────┐
│   COMBINE  k  SIGNATURES │──S704
└─────────────────────────┘
             │
             ▼
┌─────────────────────────┐
│  TRANSMIT  SIGNATURES SK·h │──S705
└─────────────────────────┘
             │
             ▼
┌─────────────────────────┐
│      ADD  THE  BLOCK     │──S706
└─────────────────────────┘
```

## FIG.8

401 402 400 403

A13afb3sdf ⟶ Bsadf4fgbd 10BTC

M A

404

## FIG.9

# FIG.10

401               402    400    403

A13afb3sdf ⟶ Bsadf4fgbd    10BTC

| B | M | A |
|---|---|---|

404

<div align="center">

**INTERNATIONAL SEARCH REPORT**

</div>

| | International application No. |
|---|---|
| | PCT/JP2020/003840 |

**A. CLASSIFICATION OF SUBJECT MATTER**
H04L 9/32(2006.01)i; G06Q 20/06(2012.01)i; G06F 21/64(2013.01)i
FI: H04L9/00 675Z; H04L9/00 675B; G06F21/64; G06Q20/06 300

According to International Patent Classification (IPC) or to both national classification and IPC

**B. FIELDS SEARCHED**

Minimum documentation searched (classification system followed by classification symbols)
H04L9/32; G06Q20/06; G06F21/64

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)
JSTPlus/JMEDPlus/JST7580 (JDreamIII); IEEE Xplore

**C. DOCUMENTS CONSIDERED TO BE RELEVANT**

| Category* | Citation of document, with indication, where appropriate, of the relevant passages | Relevant to claim No. |
|---|---|---|
| A | JP 6389542 B1 (DAIWA INSTITUTE OF RESEARCH BUSINESS INNOVATION LTD.) 12.09.2018 (2018-09-12) paragraphs [0045]-[0051], [0516]-[0575], fig. 37-42 | 1-10 |
| A | WO 2018/215951 A1 (NCHAIN HOLDINGS LIMITED) 29.11.2018 (2018-11-29) page 19, line 7 to page 20, line 22, fig. 1 | 1-10 |
| A | CN 107528886 A (INSTITUTE OF COMPUTING TECHNOLOGY CHINESE ACADEMY OF SCIENCES) 29.12.2017 (2017-12-29) paragraphs [0044]-[0049], [0065]-[0090], fig. 1-8 | 1-10 |

☒ Further documents are listed in the continuation of Box C.  ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 11 March 2020 (11.03.2020) | 24 March 2020 (24.03.2020) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

| International application No. |
| --- |
| PCT/JP2020/003840 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | 東角 芳樹 ほか，コンソーシアムチェーンにおける証明書管理に関する一考察，2017 年暗号と情報セキュリティシンポジウム(SCIS2017)予稿集 [USB], 24 January 2017, 1F2-3, pp. 1-4, see "3.3 Operation of chain management", non-official translation (HIGASHIKADO, Yoshiki et al., "A Study on Certificate Management in Consortium Chain", Preprints of the 2017 Symposium on Cryptography and Information Security(SCIS2017) [USB]) | 1-10 |
| A | 稲村 勝樹 ほか，回覧文書閲覧確認に適した階層表記型多重署名方式の提案と実装評価，電子情報通信学会論文誌 B, 01 October 2010, vol. J93-B, no. 10, pp. 1378-1387, see "2.2 BLS signature by pairing", "2.3 GDH multiple signature", (INAMURA Masaki et al., "Proposal and Evaluation of a Hierarchical Multisignature Adapted to Browsing Verification of a Document for Circulating", Proceedings of IEICE B) | 1-10 |

Form PCT/ISA/210 (continuation of second sheet) (January 2015)

**INTERNATIONAL SEARCH REPORT**
Information on patent family members

| International application No. |
|---|
| PCT/JP2020/003840 |

| Patent Documents referred in the Report | Publication Date | Patent Family | Publication Date |
|---|---|---|---|
| JP 6389542 B1 | 12 Sep. 2018 | JP 2018-156612 A | |
| WO 2018/215951 A1 | 29 Nov. 2018 | TW 201901575 A | |
| CN 107528886 A | 29 Dec. 2017 | (Family: none) | |

Form PCT/ISA/210 (patent family annex) (January 2015)